# EUROPÄISCHE PATENTANMELDUNG

(11) **EP 1 099 806 A2**
(43) Veröffentlichungstag der Anmeldung: **16.05.2001**
(21) Anmeldenummer: 00124181.9
(22) Anmeldetag: 08.11.2000
(51) Int. Cl.: E04B 1/74

(54) **Dämmmaterial aus biogenen Rohstoffen als Schütt-,Matten- und Plattendämmung für den Innenausbau von Gebäuden**

(30) Priorität: 12.11.1999 DE 19954474
(71) Anmelder: Amt Klützer Winkel, 23948 Klütz (DE)
(72) Erfinder: Anders, Bernd, 23948 Rolofshagen (DE); Boost, Frank, 23948 Rolofshagen (DE); Koth, Hanno, 23999 Kaltenhof/Insel Poel (DE); Gerath, Horst, 23999 Malchow/Insel Poel (DE)
(74) Vertreter: Schnick, Achim

(57) **Zusammenfassung**

Aufgabe der Erfindung ist es, einen biogenen Rohstoff als Material für Wärmedämmung und Schallisolierung anzuwenden, der in Form von Schütt-, Matten- oder Plattendämmung einsetzbar ist, wobei die Eigenschaften dieses Materials eine zusätzliche Behandlung mit Fungiziden, Pestiziden und feuerhemmenden Substanzen unnötig machen.

Die Aufgabe wird erfindungsgemäß durch die Verwendung von getrocknetem, von Fremdstoffen gereinigtem und entstaubtem Seegras gelöst. Zur Verwendung von aufbereitetem Seegras für eine Schüttdämmung wird das Seegras als Seegrashäcksel in einer Länge von vorzugsweise 5 bis 30 mm aufbereitet, während das Seegras zur Verwendung für eine Matten- oder Plattendämmung in einer Länge von vorzugsweise > 100 mm aufbereitet ist.

## Beschreibung

Die Erfindung betrifft ein Dämmmaterial aus biogenen Rohstoffen, das beim Innenausbau von Gebäuden zur Durchführung von Wärmedämm- und Schallschutzmaßnahmen zum Einsatz gelangt. Insbesondere betrifft die Erfindung ein Dämmaterial, das sowohl als schüttfähiges oder maschinell einblasbares Material als auch in Form von Dämmmatten und Dämmplatten für die Wärmedämmung oder Schallschutzdämmung von Dächern, Innen- und Au-βenwänden, Fußböden und Decken im Hochbau einsetzbar ist.

Gemäß dem bekannten Stand der Technik kommt dem Einsatz von biogenen Rohstoffen als Wärmedämmung und Schallschutz im Bauwesen eine zunehmende Bedeutung zu.

In der Patentanmeldung DE 43 17 239 befaßt sich eine Lösung mit der wirtschaftlichen Verwendung von Naturfasern wie Flachs und von Biomasse wie Stroh, Holzwolle, Holzspäne oder gehäckseltem Schilf oder andere Pflanzen für Wärme- und Schallisolierung. Die gemäß dieser Erfindung hergestellten Matten bestehen aus einer Umhüllung aus Jute oder Flachs und einer Füllung aus Flachsfaser, Wolle, Schilf oder Stroh.

Nach DE 43 30 929 werden als Dämmmaterial pflanzliche Rohstoffe, nämlich blähfähige Getreidekömer eingesetzt, die im Ergebnis des thermischen Blähens bzw. Puffens eine Leichtphase mit poriger Struktur und wesentlich verringerter Dichte aufweisen und deren Oberfläche mit einem feuerwiderstandserhöhenden Mittel beschichtet ist.

Nach DE 196 07 963 wird eine Dämmstoffschüttung hergestellt, bei der als Dämmstoff Reis-hülsen zum Einsatz kommen, die in einer vorgegebenen Dichte verarbeitet werden.

Gemäß DE 296 06 160 wird als schütt- und maschinell einblasfähiger Wärmedämmstoff Ge-treidestroh in Form von Fasern eingesetzt.

Der grundlegende Nachteil aller bisher zum Einsatz gelangenden Dämmmaterialien aus biogenen Rohstoffen besteht darin, daß sie, in welcher Form sie auch immer zu einer Dämmung verarbeitet werden, einer zusätzlichen Behandlung mit Fungiziden und Pestiziden unterzogen werden müssen, durch die ein Befall des Dämmmaterials mit zu Fäulnis und Schimmel führenden Pilzen, Bakterien und mit Insekten weitgehend eingeschränkt werden soll. Darüber hinaus ist eine zusätzliche Behandlung des Materials mit borhaltigen oder anderen feuerhemmenden Substanzen notwendig, um damit den Feuerwiderstand der Dämmung zu verbessern und dadurch eine den Vorschriften entsprechende Brandschutzklasse B2 einzuhalten.

Aufgabe der Erfindung ist es, einen biogenen Rohstoff als Material für Wärmedämmung und Schallisolierung anzuwenden, der in Form von Schütt-, Matten- oder Plattendämmung einsetzbar ist, wobei die Eigenschaften dieses Materials eine zusätzliche Behandlung mit Fungiziden, Pestiziden und feuerhemmenden Substanzen unnötig machen.

Die Aufgabe wird erfindungsgemäß durch die Verwendung von getrocknetem, von Fremdstoffen gereinigtem und entstaubtem Seegras gelöst. Zur Verwendung von aufbereitetem Seegras für eine Schüttdämmung wird das Seegras als Seegrashäcksel in einer Länge von vorzugsweise 5 bis 30 mm aufbereitet, während das Seegras zur Verwendung für eine Matten-oder Plattendämmung in einer Länge von vorzugsweise > 100 mm aufbereitet ist.

Die Erfindung wird anhand von Ausführungsbeispielen näher erläutert. Das Seegras wird getrocknet und gereinigt und für die Verarbeitung als Dämmmaterial aufbereitet. Dabei wird auf weitgehend herkömmliche Technologien zurückgegriffen. Das aus dieser Behandlung gewonnene lose Rohmaterial wird der Seegrasfraktionierung zugeführt. Die Seegrasfraktionierung erfolgt mit Schüttelsieben nach dem Dreschkastenprinzip und durch Windsichtung im Steigsichter mit anschließendem Windkanal.

In dieser Aufbereitungsstufe fallen unterschiedliche Fraktionen an, die, wie später beschrieben wird, unterschiedlichen Dämmungsformen zugeführt werden. Die Fraktionen sind durch die Länge des Seegrases gekennzeichnet.

Für die Schüttdämmung wird Seegrashäckselung eingesetzt. Mit einem spezifizierten Häcksler, der nach dem Schlegel-Schneid-Prinzip arbeitet, werden Seegrashäcksel von 5 bis 30 mm Länge hergestellt. Nach anschließender Zyklonentstaubung erfolgt die Verpackung in Papier-und Foliensäcken (gepresst zu ca. 15 kg/Sack), die auf Paletten eingestretcht werden.

Die Entstaubung der Seegrashäckselung ist insbesondere ein Erfordernis des Gesundheits-schutzes. Aus medizinischer Sicht müssen Staubbildung bei der Be- und Verarbeitung, aber auch bei einer späteren Entsorgung von Seegrasschüttungen weitestgehend ausgeschlossen werden.

Seegrashäcksellängen von 5 bis 30 mm garantieren eine gute Blasfähigkeit zum Beispiel mit Lamellenradgebläsen. Es ist somit ein gleichmäßiges Befüllen von Hohlräumen als Voraus-setzung für eine optimale Trittschalldämmung, Wanddämmung, Deckendämmung und Dach-dämmung gewährleistet.

Die inneren und äußeren Strukturen des Seegrases (Aerochym, Oberflächenstruktur und Trockenkräuselung) bleiben bei einer derartigen Häcksellänge erhalten und erfüllen in gleichem Maße sowohl den Wärmeschutz durch geringe Wärmeleitfähigkeit und hohe Wärmekapazität sowie den Schallschutz.

Bei der genannten Häcksellänge wird eine Lagerdichte von rund 55 bis 60 kg/m³ erreicht und somit ein Nachsacken der Schüttdämmung weitestgehend vermieden und stattdessen eine leicht federnde Ablage mit günstigem Porenvolumen erreicht. Wärmebrückenbildung auf La-gerwechsel ist weitgehend ausgeschlossen und die niedrige Wasserdiffusionswiderstandszahl bei freier Luftkonvektion bleibt erhalten.

Der Einsatz von aufbereitetem Seegras als Matten- oder Plattendämmung erfordert eine See-grasein- und -vernetzung bzw. eine Seegrasvernadelung zu Dämmmatten. Das dafür bereitgestellte Seegras hat eine Länge von über 100 mm. Die Ein- und Vernetzung von Seegras mit Naturfasern oder Kunststofffasern zu Dämmmatten oder die Vernadelung von Seegras zu Dämmvliesplatten, wobei die Vernadelung mit Seegras, Naturfasern wie Flachs, Hanf, Jute oder auch mit Kunstfasern vorgenommen wird, erfolgt nach Aerosichtung und -verdichtung vorzugsweise mit den Seegraslängen von 100 bis 200 mm und über 200 mm. Die Matten können je nach Bedarf in Dicken von 30 bis 200 mm und in Flächen von 1 bis ca. 50 m² gefertigt werden.

Kleine Matten (1 bis 4 m²) werden 1. ausschließlich aus Seegras (vernetzt oder vernadelt) gefertigt, und 2. als Sandwichmatten oder -platten produziert. Bei Sandwichmatten oder platten wird das Seegras beidseitig oder einseitig mit Papier, Pappe, Folien oder Spanplatten beschichtet.

Große Matten (5 bis 50 m²) werden ausschließlich aus Seegras gefertigt und in Form von Rollenware bis 3 m Breite und 30 bis 200 mm Dicke angeboten. Die Seegrasdämmmatten sind ein- oder vernetzt, die Seegrasvliesdämmmatten sind vernadelt.

In Küstenregionen, insbesondere an Badestränden stellt das jährlich angespülte Seegras für die verantwortlichen Gemeinden ein Problemstoff dar, der bisher mit beträchtlichen finan-ziellen Aufwendungen der Deponierung zugeführt werden musste. Die Erfindung führt diesen biogenen Problemstoff _{"}Seegras" einer wirtschaftlichen Verwertung als Dämmmaterial zu.

Die Vorteile der Verwendung von Seegras als Dämmmaterial gegenüber Dämmungen aus nachwachsenden Rohstoffen sind vielfältig.

Die hohe Wärmedämmwirkung und Schalldämmung von getrocknetem Seegras ist insbesondere auf seine spezifische Morphologie und sein spezifisches Verhalten bei der Trocknung zurückzuführen. Die unebene Blattoberflächestruktur und Kräuselung des getrockneten Blattes führt zur stabilen Seegrasschichtung mit Lufteinschlüssen, sowohl bei der Schüttdämmung als auch bei der Matten- oder Plattendämmung. Das Seegras besitzt darüber hinaus ein Aero-chym, das die Wärmeleitfähigkeit und die Ausbreitung von Schallwellen herabsetzt. Die Wärmeleitfähigkeitsklasse von λ = 0,04 W m⁻¹ k⁻¹wird dadurch sicher erreicht.

Seegras hat einen Borgehalt von ≥ 800 ppm und zusätzlich einen hohen Kieselsäuregehalt. Beide Substanzen sorgen für eine hohe Brandfestigkeit, bei der die Brandklasse B2 ohne zusätzliche Imprägnierung sicher eingehalten wird.

Durch den hohen Bor- und Kieselsäuregehalt hat Seegras eine besonders gute Schimmel- und Bakterienresistenz. Es ist demzufolge biologisch sehr schwer abbaubar. In Mineralisierungs-versuchen im Boden und in Biogasversuchen im Fermenter ist diese herausragende Eigenschaft des Seegrases übereinstimmend nachgewiesen worden.

Mit der Verwendung von Seegras als Dämmmaterial kommt ein von ökologiebewußten Bau-herren dringend benötigter Ökobaustoff zum Einsatz, die mit Naturbaustoffen ohne chemische Zusatzbehandlung bauen wollen. Der Einbau von Seegrasschüttdämmungen wird im Dachbereich zwingend und im Decken-, Wand- und Fußbodenbereich bevorzugt mit herkömmlicher Einblastechnik erfolgen. Im Fußboden-, Wand- und Deckenbereich ist auch die direkte Schüttung der Seegrashäcksel möglich.

Die Nutzung von Seegrasdämmmatten, Seegrasvliesdämmmatten und Seegrasdämmplatten für Dämmzwecke in Gebäuden ist mit herkömmlicher Technologie unproblematisch möglich. Diese Elemente lassen sich leicht schneiden, sind flexibel und passen sich Unebenheiten in den Häusern problemlos an.

## Patentansprüche

1. Dämmmaterial aus biogenen Rohstoffen zur Verwendung als Wärmedämmung und/oder Schallisolierung bestehend aus getrocknetem, von Fremdstoffen gereinigtem und entstaubtem Seegras.

2. Dämmmaterial nach Anspruch 1, dadurch gekennzeichnet, daß das Seegras zur Verwendung für eine Schüttdämmung als Seegrashäcksel in einer Länge von vorzugsweise 5 bis 30 mm aufbereitet ist.

3. Dämmmaterial nach Anspruch 1, dadurch gekennzeichnet, daß das Seegras zur Verwendung in Dämmmatten, Dämmvliesmatten oder Dämmplatten in einer Länge von vorzugsweise > 100 mm aufbereitet ist.

4. Dämmmaterial nach Anspruch 1 und 3, dadurch gekennzeichnet, daß das Seegras mittels Naturfasern oder Kunststofffasern zu Dämmmatten vernetzt ist.

5. Dämmmaterial nach Anspruch 1 und 3, dadurch gekennzeichnet, daß das Seegras zur Verwendung in einer Dämmvliesmatte mittels Seegras, Naturfasern oder Kunststofffasern vernadelt ist, wobei das Seegras einseitig oder beidseitig mit Papier, Pappe, Folie und/oder Spanplatten beschichtet ist.
